Europäisches Patentamt

European Patent Office

Office européen des brevets

(11) Publication number: **0 567 150 A1**

# EUROPEAN PATENT APPLICATION

(21) Application number: **93106657.5**

(22) Date of filing: **23.04.93**

(51) Int. Cl.5: **H02K 41/025, B66B 11/04**

(30) Priority: **24.04.92 JP 105039/92**

(43) Date of publication of application:
**27.10.93 Bulletin 93/43**

(84) Designated Contracting States:
**CH DE FR LI**

(71) Applicant: **OTIS ELEVATOR COMPANY**
**10 Farm Springs**
**Farmington, CT 06032(US)**

(72) Inventor: **Nemoto,Masahiko**
**Nougaya-cho 1425-1**
**Machida-shi, Tokyo(JP)**
Inventor: **Kohroki,Keiichi, K.K.Meidensha**
**Osaki 2-1-17**
**Shinagawa-ku, Tokyo(JP)**

(74) Representative: **Klunker . Schmitt-Nilson .**
**Hirsch**
**Winzererstrasse 106**
**D-80797 München (DE)**

(54) **Elevator linear motor.**

(57) A tubular linear motor primary has a plurality of abutting plates each having an elongated body and teeth (13) depending therefrom, each of said plates having at least one tooth removed therefrom in register with a removed tooth from each abutting plate, said removed teeth creating a gap; a first clamp (17a) for holding the plates together to form a group (5), a jig (17) disposed in the gap, the jig (17) having a shaped surface (17b) to conform the group (5) to the shaped surface (17b); and a means (16) for mechanically holding said group (5) against said shaped surface (17b) without welding.

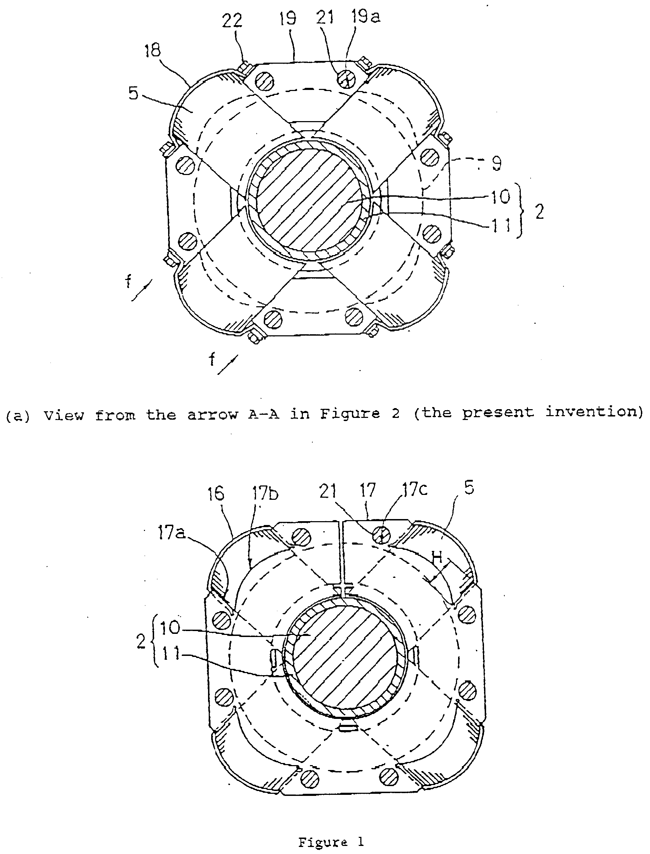

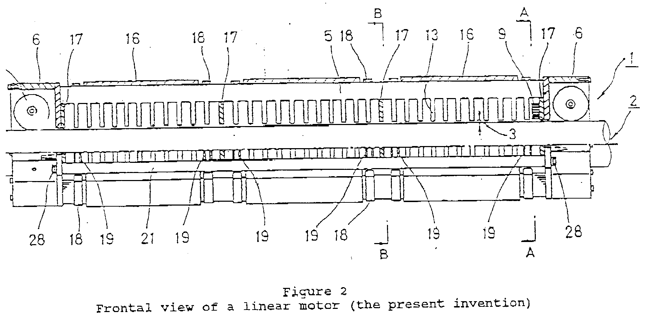

(a) View from the arrow A-A in Figure 2 (the present invention)

Figure 1

Figure 2
Frontal view of a linear motor (the present invention)

Background of the Invention

1. Technical Field

The present invention relates to a tubular linear motor having a plurality of core groups joined together without welding.

2. Background Art

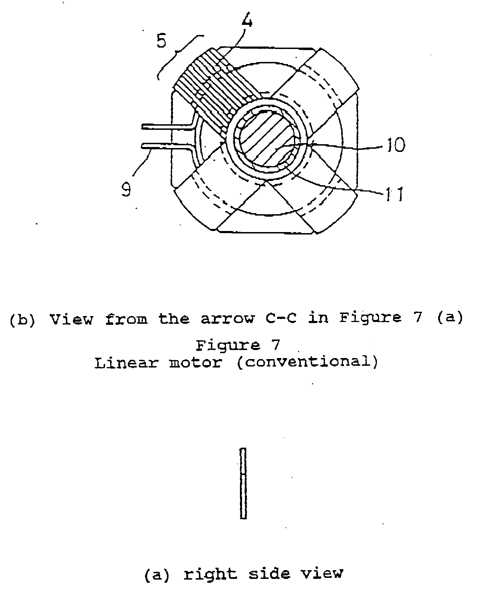

Linear motors have a structure (see Fig. 7) derived from rotary electric motors. A linear motor comprises a primary side core ("primary") 1 and a secondary side conductor ("secondary") 2. The secondary has a relatively long shape compared to the primary. The secondary is generally fixed, while the primary moves. An air gap 3 is disposed between the primary and the secondary.

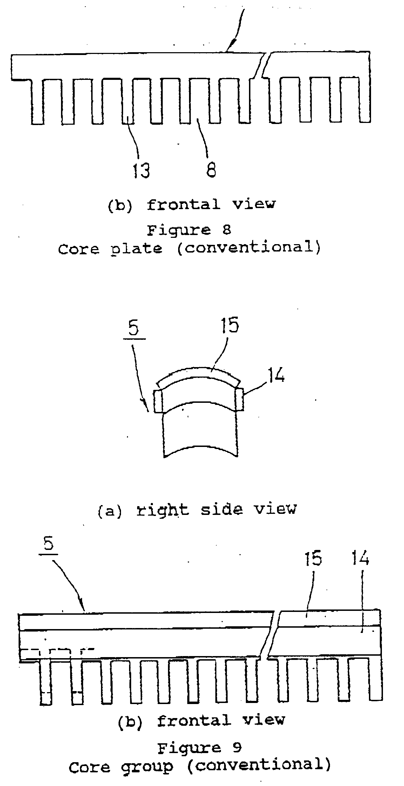

The primary 1 is formed as follows. As shown in Figures 8 (a) and (b), a number of slits 8 are formed on a thin magnetic plate thereby forming a comb-shaped core plate 4 having teeth 13. As shown in Figures 9 (a) and (b), core plates form laminations that are welded integrally with a side plate 14 and a rear plate 15, thereby forming a core group 5. The slits 8 are on the inner side facing the secondary. A number (i.e. 4) of core groups 5 are aligned radially at equal intervals in a circle about the secondary. The core groups are sandwiched between a pair of ring shaped flanges 6, and fastened by a number of through-bolts 7 and nuts (not shown), thereby forming the primary 1. Freely rotating wheels 12 are mounted inside the flanges 6. Coils 9 surrounding the secondary side conductor 2 are housed in each of the slits 8.

The secondary 2 is formed by covering the outer surface of a round, rod-shaped magnetic conductor 10 with a nonmagnetic conductor 11 such as iron. The nonmagnetic conductor is composed of aluminum, copper, an alloy thereof, or the like etc.

However, since the laminated core plate 4 is welded to the side plate 14 and the rear plate 15, bending and twisting occur in the core group 5. In addition, variations in the air gap 3 occur after assembly. In addition, the degree of parallelism of the two ends of the core group 5 may change. As a result, the following processes are carried out.

(a) Annealing removes the warping in the core group 5, thereby correcting the bending and twisting.

(b) The thicknesses of the rear plate 15 and the side plates 14 are increased in order to improve their strength. Warping caused by the welding process is thus reduced to a level which is not problematic in practical terms.

(c) After the welding process, machining is carried out to correct the bending in the circular shape of the core group 5, and to correct the degree of parallelism of its two ends to the desired level of precision over the entire length.

However, problems welding and the correction of problems caused thereby such as the following occurs

(a) It is necessary to anneal and machine in addition to welding, thus increasing the number of manufacturing steps.

(b) When the thicknesses of the rear plate and the side plate are increased, materials costs, the dimensions, and the weight of the linear motor are increased.

(c) When welding is carried out, warping inevitably occurs. However, since there are limits to the amount of warping correction which can be performed, it is difficult to manufacture a linear motor which is long and narrow.

Disclosure of the Invention

It is therefor an object of the invention to eliminate the problems of welding a linear motor primary.

It is a further object of the invention to build a linear motor primary with a minimum of labor and materials.

It is a further object of the invention to build a reliable, primary.

According to the invention, a tubular linear motor primary comprises a plurality of abutting plates each having an elongated body and teeth depending therefrom, each of the plates having at least one tooth removed which is in register with a removed tooth from each abutting plate, the removed teeth creating a gap, a first clamp for mechanically holding the plates together to form a group without welding, a core disposed in the gap and having a arcuate surface for conforming the shape of the group to a secondary, and a second clamp for mechanically holding the group against the shaped surface without welding.

The foregoing and other objects, features and advantages of the present invention will become more apparent in light of the following detailed description and accompanying drawings.

Brief Description of the Drawings

Figure 1 shows a front view of the linear motor of the present invention, Figure 1 (a) showing an oblique view along the arrow A-A in Figure 2, Figure 1 (b) showing an oblique view along the line B-B in Figure 2;

Figure 2 shows a front view of the linear motor of the present invention;

Figure 3 shows a reinforcement core of the linear motor of the present invention, Figure 3 (a) showing a front view, and Figure 3 (b) showing a right side view;

Figure 4 shows a supplementary plate of the linear motor of the present invention, Figure 4 (a) showing a front view and Figure 4 (b) showing a bottom view thereof;

Figure 5 shows a front view of the through-bolt of the linear motor of the present invention;

Figure 6 shows a band of the linear motor of the present invention, Figure 6 (a) showing a front view and Figure 6 (b) showing a bottom view;

Figure 7 shows a conventional linear motor, Figure 7 (a) showing a front view and Figure 7 (b) showing an oblique view along the line C-C in Figure 7 (a);

Figure 8 shows a core plate of the linear motor of the present invention, Figure 8 (a) showing a left side view and Figure 8 (b) showing a front view;

Figure 9 shows a core group of the linear motor of the present invention, Figure 9 (a) showing a left side view and Figure 9 (b) showing a front view;

Figure 10 shows an enlarged view of the major components of a linear motor according to a suggested improvement thereof;

Figure 11 shows a reinforcing core for use with the suggested improvement of Fig. 10.

Best Mode for Carrying Our the Invention

The present application will be explained in further detail below and as shown in the Figures. It should be noted that the present application example pertains to an improvement of part of a conventional linear motor. Components which are the same as in the conventional example are indicated by the same numbers and are not explained; only the components which are different will be described.

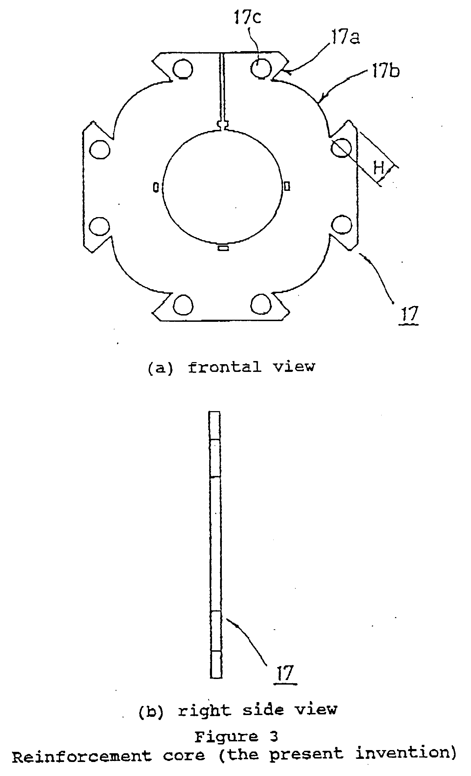

The structure of the linear motor of the present invention is shown in Figure 2. Four teeth 13, on either end of the core group 5 and in two locations between them, are removed from each abutting core plate 5. Next, the reinforcement core 17 shown in Figures 3 (a) and (b) is installed in those locations. The core has four jig portions including side walls 17a and a shaped section 17b for holding a core group 5 comprised of the plates 4 having teeth 13 removed therefrom. The shaped section is designed to conform the inner shape of each core group to the secondary (see fig. 1(a)). The depth H of the side walls 17a is made to be a depth roughly equal to the height of the core group 5 in the areas from which the teeth 13 were removed.

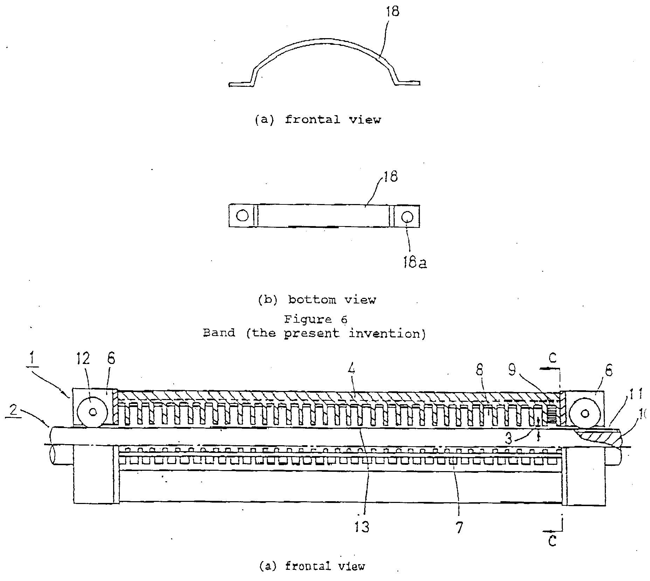

Next, as shown in Figure 1(b), a core group 5 is pressed against the shaped surfaces 17b of the reinforcement core 17. Bands 18, shown in Figure 6, are used for this purpose. The bands 18 are situated equidistantly along the core plates 4, and are formed in a shape which does not create a binding force in order to prevent the frictional force from occurring. In addition, the bands 18 are composed of a thin material with little bending rigidity so that they will easily deform to the same shape as the shape of the shaped surfaces 17b as the core groups are inserted in the jigs. Attachment holes 18a are formed on either end of the bands 18.

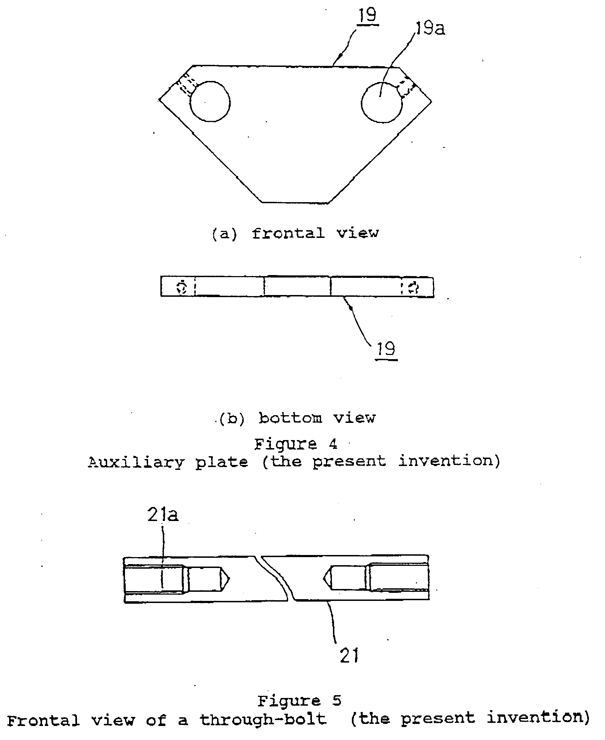

It is permissible to directly couple the bands 18 to the reinforcement core 17. However, since the reinforcement core 17 is thin, and since it is difficult to form screw holes very close to the side walls 17a, supplementary plates 19 are used. Through-holes 17c and 19a are respectively formed on the reinforcement core 17 and supplementary plates 19 as shown in Figures 3 and 4.

Screw holes 21a are formed on either end of through-bolts 21 (see Figure 5) which are passed through the aforementioned through-holes 17c and 19a. As shown in Figure 2, the two ends of the through-bolts 21 are coupled with a pair of flanges 6 by bolts 28. As Figures 1 and 2 make clear, the reinforcement plates 19 are situated between one core group 5 and another in the circumferential direction. In the axial direction, they are situated between one coil 9 and another, next to the position where the reinforcement core 17 is situated.

As shown in Figure 1 (a), the two ends of the band 18, which covers the rear surface of core group 5, are coupled to the supplementary plate 19 via bolts 22. The direction of the screw hole into which the bolt 22 is screwed is roughly parallel to the core plate 4 and the reinforcement core 17 to minimize the effect of the force vector components (and friction) if binding in a non-parallel direction. As a result, if it is parallel to the core plate 4 and the reinforcement core 17, all of the tightening force of the bolt 22 will act directly as a pressing force against the shaped surface 17b.

In addition, as shown in Figure 2, in the present embodiment, clips 16 with a U-shaped cross section are situated between one band 18 and another. As shown in Figure 1 (b), they mechanically bind the core plates 4 to one another to strengthen the binding between core plates 4 held between the side walls 17a by the bands 18.

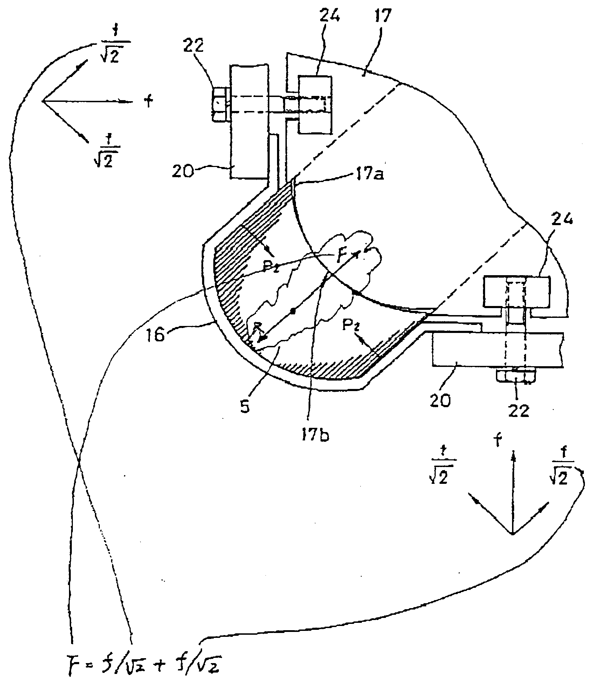

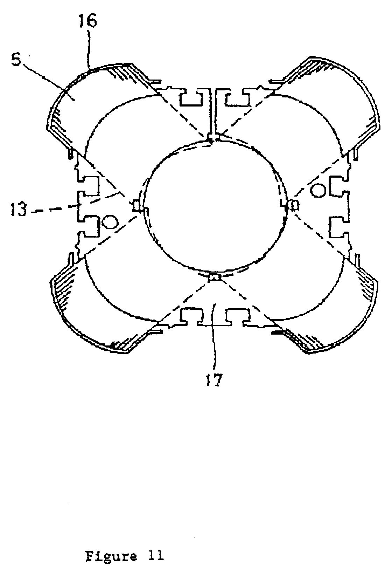

Referring now to Figure 10, as above, one or more teeth 13 (in the left and right directions as shown in Figure 7 (a)) are removed at roughly equal intervals, and reinforcement cores 17, having the shape shown in Figure 11, are inserted in the areas from which the teeth 13 have been removed. In addition, in order to allow binding between one core plate 4 and another, clips 16 which are thick and very rigid are used to bind the core groups 5. Pressing members 20 have ends which make contact with clips 16 and are inserted between angle nut 24 and bolt 22. The core group 5 is thus coupled in the location of the a side walls 17a on the reinforcement core 17.

With the structure described above, when the bolt 22 tightening force is f, a force F, which is actually applied by the bolts 22 on either side of the core group 5 to press the core group 5 against the shaped surface 17b between the side walls 17a, will have the following value.

$$F = f/\sqrt{2} + f/\sqrt{2} = \sqrt{2}\,f$$

In addition, a force R, which acts as resistance when the clips 16 and the core group 5 are deformed along the shaped surface 17b of the reinforcement core 17, is obtained as follows, with $P_1$ as the force required to deform the clip 16 itself into a shape, $P_2$ the force by which the clip 16 binds the core group 5, and $\mu$ the coefficient of friction existing between the clip 16 and core plate 4 and between one core plate 4 and another and N equals the number of sliding faces.

$$R = P_1 + P_2 + (f/\sqrt{2})\,\mu \times N$$

Thus, the force F, by which the core group 5 is pressed against the shaped surface 17b of the reinforcement core 17, grows smaller according to the following multiple of the bolt 22 tightening force f:

$$1/\sqrt{2}$$

In addition, the clips 16 are designed to be very thick in order to bind the core groups 5. For this reason, deformation along the shaped surface 17b is difficult. In addition, the following components act: a vector perpendicular to a core plate 4 having the bolt 22 tightening force f

$$f/\sqrt{2}$$

and the bind force of the clip 16 itself

$$P_2$$

As a result, the frictional forces between the clip 16 and core plate 4 and between one core plate 4 and another are added together. Thus, the force acting as resistance R is large.

For this reason, as shown in Figure 10, it is easy for a gap to be formed between the reinforcement core 17 and the core group 5. As shown in Figure 11, the front ends of the teeth 13 on the four core groups 5 are originally designed to form cylindrical shapes with the same diameter as the inner dimensions of the reinforcement core 17. However, there is a risk that their positions will shift, resulting in the state illustrated by the dotted line.

Next, the operations of the aforementioned linear motor will be described. The core group 5 is fitted into the side walls 17a of the reinforcement core 17 and then pressed against the shaped surfaces 17b to hold it in place. Since the depth H of the side walls 17a has a large value, being roughly the same as the height of the core group 5 in the areas from which the teeth 13 were removed, the core group 5 does not slant against the side walls 17a. For this reason, the amount of labor required during operations to adjust the slant of the core group 5 is reduced.

Next, the pressing force which presses the core group 5 against the shaped surface 17b will be considered In Figure 1 (a), when the tightening force of a single bolt 22 is f, a force F, which is actually applied against the shaped surface 17b, is against the shaped surface 17b, is as follows.

$$F = f + f = 2\,f$$

In addition, a force R, which acts as resistance when the band 18 and the core group 5 are deformed along the shaped surface 17b of the reinforcement core 17, is obtained as follows, with $P_1$ being the force required to deform the band 18 itself into an shaped shape, $P_2$ being the force by which the clips 16 sandwich the core group 5, and $\mu$ being the coefficient of friction existing between the band 18 and core plate 4 and between one core plate 4 and another.

$$R = P_1 + P_2\,\mu \times N$$

Thus, the pressing force F is twice the bolt tightening force f, and the resistance R is obtained by adding together $P_1$, $P_2$ and $\mu$, which are the small forces required to deform the band 18, which has little bending rigidity. In the present application example, $P_2$ occurs since clips 16 are installed. However, since the side walls 17a act to bind the core groups 5, the clips 16 do not need to be installed, in which case the formula would be R = $P_2$.

As described above, the core group 5 is pressed against the shaped surface 17b of the reinforcement core 17 by a large force, thus creating a strong coupling force between the reinforcement core 17 and the core group 5.

In the linear motor of the present invention, since the direction in which the screw members are screwed in roughly parallel to the core plate and the reinforcement core, the tightening force of the screw members is not dispersed, but instead acts directly as a force pressing the core group against the reinforcement core. Further, since the band has little rigidity, since there is no other binding of the core group to the band, and since there is no other vector component in the binding of the core group under the tightening force of the screw member, there is little resistance to the aforementioned pressing force. For this reason, the core group is properly and firmly coupled to the reinforcement core. In addition, since the side walls are a depth roughly equal to the height of the core group in the areas from which the teeth were removed, the core group does not slant, but is instead bound.

Because of the effects described above, the following advantages are obtained.

(a) Since warping due to welding does not occur, it is possible to manufacture long, narrow linear motors.

(b) Steps such as annealing and finishing to correct for warping caused by welding are unnecessary, thus greatly reducing the time required for assembly. As a result, manufacturing costs are reduced.

(c) The core group is coupled to the reinforcement core by a large pressing force. Thus, a gap is not formed between the reinforcing core and the core groups. For this reason, the tips of the teeth on the core group are aligned with precision creating a uniform air gap. It is thus possible to obtain a highly efficient linear motor having no variation in its characteristics.

Although the invention has been shown and described with respect to a best mode embodiment thereof, it should be understood by those skilled in the art that various other changes, omissions and additions in the form and detail thereof may be made therein without departing from the spirit and scope of the invention. It should be noted that although the two ends of the bands were coupled to the reinforcement core to sandwich a supplementary plate in the present application example, it is also possible to couple them without situating a supplementary plate in between. In addition, by setting a screw opposite the screw member, the members may be set opposite each other.

Although the invention has been shown and described with respect to a best mode embodiment thereof, it should be understood by those skilled in the art that various other changes, omissions and additions in the form and detail thereof may he made therein without departing from the spirit and scope of the invention.

**Claims**

1. A tubular linear motor primary comprising
   coils,
   a plurality of laminated core plates having an elongated body and teeth depending therefrom, said laminated plates forming a group, said plates receiving said coils between said teeth, each of said plates having at least one tooth removed therefrom in register with a removed tooth from each abutting plate, said removed teeth creating a gap in said group;
   a first core disposed in said gap, said core having a shaped surface and means for holding said group against said shaped surface without welding; and,
   means to hold said group together without welding.

2. The primary of claim 1 wherein said means for holding said group against said shaped surface further comprises:
   means for connecting adjacent groups into a primary.

3. The primary of claim 2 wherein said means to hold further comprises:
   means for mechanically clamping said plates together to form said group.

4. The primary of claim 3 wherein said means for mechanically clamping comprises:
   a second core,
   a clip, and
   means for clamping said clip to said core.

5. A tubular linear motor primary comprising:
   a plurality of abutting plates each having an elongated body and teeth depending therefrom, each of said plates having at least one tooth removed therefrom in register with a removed tooth from each abutting plate, said removed teeth creating a gap;
   means for mechanically clamping said plates together to form a group,
   a reinforcement core disposed in said gap, said core having a shaped surface; and
   means for mechanically holding said group against said shaped surface without welding.

6. The primary of claim 5 wherein said means for holding said group against said shaped surface further comprises:
   means for connecting adjacent groups into a primary.

7. The primary of claim 6 wherein said means for holding said means for connecting adjacent groups into a primary comprises:
   at least one means for anchoring said means for mechanically holding.

8. A tubular linear motor primary comprising:

a plurality of abutting plates each having an elongated body and teeth depending therefrom, each of the plates having at least one tooth removed which is in register with a removed tooth from each abutting plate, the removed teeth creating a gap,

a first clamp for mechanically holding the plates together to form a group,

a core disposed in the gap and having a arcuate surface for conforming the shape of the group to a surface of a secondary, and

a second clamp for mechanically holding the group against the shaped surface.

(a) View from the arrow A-A in Figure 2 (the present invention)

Figure 1

Figure 2
Frontal view of a linear motor (the present invention)

(a) frontal view

(b) right side view

Figure 3
Reinforcement core (the present invention)

(a) frontal view

(b) bottom view

Figure 4
Auxiliary plate (the present invention)

Figure 5
Frontal view of a through-bolt (the present invention)

11

18

(a) frontal view

18

18a

(b) bottom view

Figure 6
Band (the present invention)

1    12   6                                    4              8    9    C    6    11

2                                                                              10

3

13                      7                  C

(a) frontal view

(b) View from the arrow C-C in Figure 7 (a)

Figure 7
Linear motor (conventional)

(a) right side view

(b) frontal view

Figure 8
Core plate (conventional)

(a) right side view

(b) frontal view

Figure 9
Core group (conventional)

Figure 10

$$F = f/\sqrt{2} + f/\sqrt{2}$$

Figure 11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-2 808 002 (ERWIN) <br> * column 2, line 57 - column 3, line 55; figures 1,2 * <br> --- | 1-8 | H02K41/025 <br> B66B11/04 |
| Y | FR-A-2 430 128 (GRADIENT) <br> * page 4, line 30 - page 5, line 28; figures 1,2 * <br> --- | 1,2,5,6 | |
| P,Y | EP-A-0 502 613 (OTIS ELEVATOR) <br> * column 3, line 2 - column 4, line 25; figures 1-8 * <br> ----- | 3,4,7,8 | |
| | | | **TECHNICAL FIELDS SEARCHED (Int. Cl.5)** <br><br> H02K <br> B66B <br> H02N |

The present search report has been drawn up for all claims

| Place of search | Date of completion of the search | Examiner |
|---|---|---|
| THE HAGUE | 15 JULY 1993 | TIO K.H. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                
& : member of the same patent family, corresponding
   document

EPO FORM 1503 03.82 (P0401)